(19) **Europäisches Patentamt / European Patent Office / Office européen des brevets**

(11) **EP 2 605 056 A1**

(12) # EUROPÄISCHE PATENTANMELDUNG

(43) Veröffentlichungstag:
**19.06.2013  Patentblatt 2013/25**

(51) Int Cl.:
***G02B 27/01*** *(2006.01)*

(21) Anmeldenummer: **12163175.8**

(22) Anmeldetag: **04.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.12.2011  EP 11194167**

(71) Anmelder: **Grunert, Joachim Rainer**
**8008 Zürich (CH)**

(72) Erfinder: **Grunert, Joachim Rainer**
**8008 Zürich (CH)**

(54) **System zur Betrachtung eines augennahen Displays**

(57)     Das Patent wird beantragt für ein System zur ermüdungsfreien Betrachtung eines Displays aus einem Abstand zwischen etwa 6 bis 12 cm vom Auge (für die späteren Beschreibungen und Berechnungen wird der Mittelwert von 9 cm verwandt).

Das System besteht aus zwei Komponenten:

1.
Einer Brille, an welcher in etwa 9 cm von der Linse eine Halterung zur Befestigung des Displays (z. B. eines Smartphones) angebracht ist.

2.
Einer Linse, respektive Linsensystem, welches die ermüdungsfreie Betrachtung eines Displays aus einem Abstand zwischen etwa 6 bis 12 cm vom Auge, mit einem und zwei Augen, ermöglicht.

Die technische Beschaffenheit des Displays ist für das Patent unerheblich. Auch ist bedeutungslos, ob das optische System zusätzlich mit Filtern (z. B. Farb- oder Polarisationsfilter die eine dreidimensionale Wahrnehmung erlauben) oder gar einem 3-D-Shuttersystem versehen wird. Auch die Beschaffenheit des optischen Systems (Glas, Kunststoff, kristalline Werkstoffe oder andere Materialien) spielt für den Patentanspruch keine Rolle.

Gleiches gilt für die Halterung, diese kann sowohl mit verstärkten Bügeln wie z. B. bei Sportbrillen, mit einem zusätzlichen Band zur Halterung am Kopf oder mit technischen Zusätzen wie z. B. Ohrhörern versehen sein (Abbildungen 1 bis 5).

Das Gesamtsystem im Einsatz mit Ohrhörern (Abbildung 5)

EP 2 605 056 A1

**Beschreibung**

Wird ein Smartphone oder ähnliches Display mir einer Spezialbrille oder Halterung in einem Abstand zwischen 60 bis 100 mm vor den Augen angebracht, ist eine scharfe Darstellung, aus Gründen der physikalischen Beschaffenheit des Auges unmöglich.

1. Der Nahpunkt, mit dem das Auge unter grösster Anspannung noch scharf sehen kann, liegt bei einem gesunden Auge bei etwa 100 mm. Bei der Nahsicht (Akkommodation) kontrahiert der Ziliarmuskel und als Folge wölbt sich die elastische Linse des Auges. Die Akkommodation reicht dabei vom entspannten Auge (0 Dioptrien) bis zum maximal akkommodierten Auge ca. 14 Dioptrien.

2. Es existieren zwei Augen mit koordinierter Muskelsteuerung, die eine Fusion (Verschmelzung) der beiden Bildeindrücke des rechten und linken Auges zu einem einzigen ermöglichen (binokulares Einfachsehen). Jedes Auge nimmt beim Betrachten eines Objektes einen geringfügig anderen Winkel zu diesem ein. Je weiter ein Objekt entfernt ist, desto mehr nähern sich die Gesichtslinien der Augen einem Parallelstand. Betrachtet man dagegen sehr nahe Objekte, müssen die Augen eine Konvergenzbewegung[1] zur Nase hin vollführen. Bei sehr nahen Objekten führt dies zu massivem zur Nase gerichtetem Schielen.

Auf eine Entfernung von 60 bis 100 mm ist die Betrachtung eines Gegenstandes oder Displays wenn überhaupt, nur mit äußerster Anspannung und über sehr kurze Zeit möglich.

**Lösung und Patentanspruch**

Um die Betrachtung eines augennahen Displays zu ermöglichen, gilt es daher zwei Schwierigkeiten zu lösen:

1.  Korrektur des Nahpunktes in einen Bereich, der akkomodationsloses Sehen[2] von sehr nahen Objekten ermöglicht.
2.  Korrektur des Konvergenznahpunktes, um eine möglichst parallele Ausrichtung beider Augen auf ein sehr nahes Objekt zu ermöglichen

[1] Als Konvergenz wird die grundlegende Art von gegensinniger Augenbewegung (Vergenz) bezeichnet, bei der aus der Parallelstellung heraus die beiden Gesichtslinien der Augen vor ihnen zur Überschneidung gebracht werden. Dies wird ausgelöst durch einen beidseitigen Bewegungsimpuls um eine jeweils senkrechte Achse nach innen, also zur Nase hin (Adduktion). Diese Bewegungsform ist essentiell für die Betrachtung von Objekten in der Nähe, ohne dabei eine Doppelbildwahrnehmung auszulösen. Die Stelle, an der ein Objekt in der Nähe gerade noch binokular einfach gesehen werden kann, nennt man Konvergenznahpunkt. *(http://de.wikipedia.org/wiki/Konvergenz_%28Auge%29)*

[2] Betrachten eines Objektes ohne Anspannung des Ziliarmuskels.

Beide Korrekturen lassen sich in einer Linse vereinigen. Der Übersicht halber werden die Mechanismen hier jedoch getrennt beschrieben.

**Korrektur des Nahpunktes**

Mit der Linsengleichung, auch Abbildungsgleichung genannt, kann man die optische Abbildung einer idealen Linse berechnen. Das Ergebnis wird in Brechkraft bzw. Dioptrien angegeben:

$$D \text{ (Dioptrien)} = \frac{1}{g \text{ (Gegenstandsweite in Metern)}} + \frac{1}{b \text{ (Bildweite in Metern)}}$$

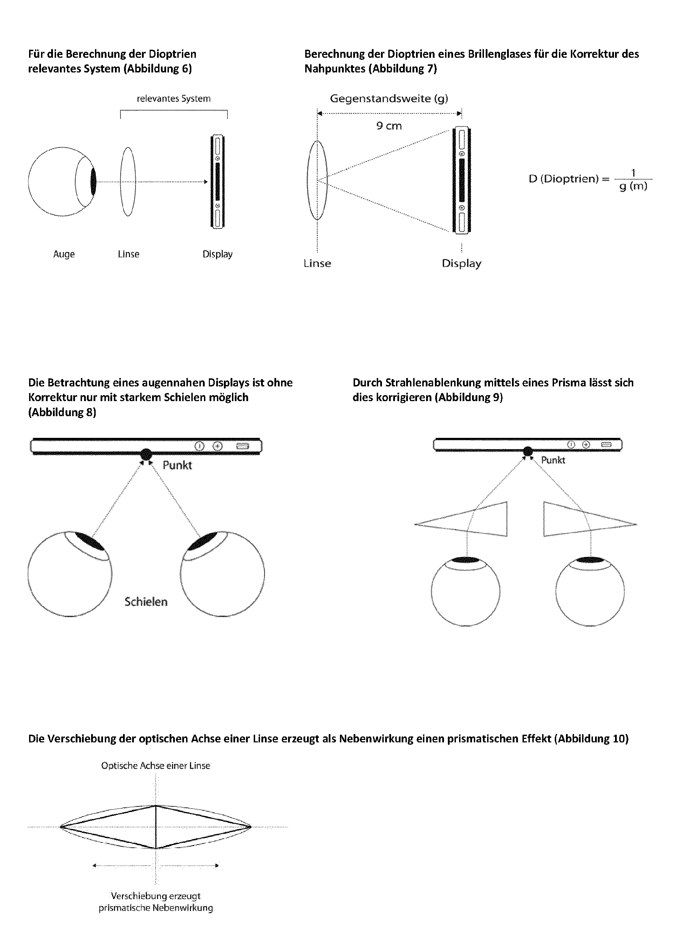

Bedingt durch die Fähigkeit der Akkommodation und der Flexibilität der Augenlinse kann bei Brillen und brillenähnlichen Systemen die Bildweite vernachlässigt werden (Abbildung 6).

Die Berechnung des Korrekturwertes reduziert sich daher beim gesunden Auge auf folgende Formel (Abbildung 7):

$$D \text{ (Dioptrien)} = \frac{1}{g \text{ (Gegenstandsweite in Metern)}}$$

Für die Betrachtung eines Displays mit einem Abstand von etwa 9 cm zur Spezialbrille ergibt sich dabei folgender Wert:

$$\frac{1}{0,09\ (m)} = 11,11\ \text{Dioptrien}$$

Gerundet ergibt dies einen erforderlichen Korrekturwert von 11 Dioptrien.

Eine entspannte Betrachtung bei einer alleinigen Korrektur des Nahpunktes ist dennoch nicht möglich, denn der Augenabstand würde beim Fokussieren ein erhebliches Schielen zur Nase hin Folge haben (Abbildung 8).

Eine Ablenkung des Strahlenganges im Umfang einer Parallelstellung der Augen ist daher für entspanntes Sehen unumgänglich(Abbildung 9).

**Korrektur des Konvergenznahpunktes**

Um den Konvergenznahpunkt zu korrigieren, wird auf ein Prisma[3] zurückgegriffen.

[3]Unter einem Prisma wird in der Optik ein Bauelement mit der Form des geometrischen Körpers Prisma verstanden, das für unterschiedliche optische Funktionen (z. B. als dispersives Element oder zur Umlenkung eines Lichtstrahls) eingesetzt wird. Bei der Form handelt es sich häufig um ein gerades Prisma mit einem Dreieck als Grundfläche. Seine optischen Eigenschaften hängen im Wesentlichen von den Dreieckswinkeln bzw. der Lage der optisch wirksamen Prismenflächen zueinander und vom Brechungsindex des Werkstoffes (z. B. Glas oder transparenter Kunststoff) ab. *(http://de.wikipedia.org/wiki/Prisma_%28Optik%29)*

In der Augenoptik wird der Wert eines Prismas in P (Prismendioptrien) angegeben und errechnet sich aus dem Ablenkungswinkel in Zentimeter je Meter:

$$P\ (\text{Prismendioptrien}) = \frac{a\ (\text{Ablenkung in Zentimeter})}{e\ (\text{Distanz in Meter})}$$

Bei einem normalen Augenabstand von 64 mm und einem exakt zwischen beiden Augen liegendem Fixpunkt ergibt sich der Wert der Prismendioptrien aus folgender Formel:

$$\frac{Pd\ (\text{Pupillendistanz in cm})\ /\ 2}{g\ (\text{Gegenstandsweite in cm})} = \frac{P\ (\text{Prismendioptrien})}{100}$$

Angewandt auf normalsichtige Menschen ergibt dies eine Korrektur um 35 Prismendioptrien:

$$\frac{6,4\ (cm)\ /\ 2}{9,0\ (cm)} = \frac{35,55\ (\text{Prismendioptrien})}{100}$$

Eine Spezialbrille mit einem Ablenkungsindex von 35 Prismendioptrien wäre gewaltig. Ein grosser Teil der Ablenkung benötigt jedoch kein tatsächliches Prisma, sondern lässt sich durch eine Verschiebung der optischen Achse des zuvor beschriebenen Systems (Korrektur des Nahpunktes) erreichen.

**Kombination der Korrektur des Nahpunktes und Konvergenznahpunktes**

Um wenigstens teilweise den Brechungsindex des Systems zur Korrektur des Nahpunktes für einen prismatischen Effekt zu verwenden, reicht es die Achse der 11 Dioptrien starken Linse zu verschieben. Ein außermittig positioniertes Brillenglas mit einer Dioptrie hat einen Prismeneffekt, der pro 1 cm Mittenversatz exakt einer Prismendioptrie entspricht (Abbildung 10).

Eine Verschiebung von 1 cm des Korrekturglases ergibt bei 11 Dioptrien eine prismatische Nebenwirkung von 11 Prismendioptrien, eine Verschiebung von 2 cm ergibt einen Effekt von 22 Prismendioptrien.

Eine Verschiebung der optischen Achse, welche eine Wirkung von 35 Prismendioptrien erzeugt ergibt sich somit aus folgender Formel:

$$V \text{ (Versatz der optischen Achse in cm)} = \frac{P \text{ (Prismendioptrien)}}{D \text{ (Dioptrien)}}$$

Dies ergibt für normalsichtige Personen eine Verschiebung der optischen Achse um 3,26 cm:

$$\frac{35 \text{ (Prismendioptrien)}}{11 \text{ (Dioptrien)}} = 3,18 \text{ (cm)}$$

**Verschiedene Möglichkeiten zur Herstellung eines Korrekturglases**

Aus beschriebenem Sachverhalt ergeben sich drei verschiedene Möglichkeiten zur Herstellung eines Spezialglases für die Betrachtung eines augennahen Displays:

1. Ein Glas mit etwa 11 Dioptrien und 35 Prismendioptrien, dessen optische Achse im Mittelpunkt eines unangestrengt parallelen Blicks liegt.
2. Ein Glas mit etwa 11 Dioptrien und einem Versatz der optischen Achse um 3,18 cm.
3. Eine Kombination, die sich beide Effekte zunutze macht, z. B. ein Glas mit etwa 11 Dioptrien, einem Versatz um 2 cm und einem zusätzlich eingearbeiteten Prisma mit 13 Prismendioptrien.

**Befestigung des Korrekturglases in der Spezialbrille und Möglichkeiten der Anpassung**

Da nicht jeder Mensch normalsichtig ist, der Augenabstand variiert, und auch je nach Grösse des Displays eine Änderung des Abstandes vom Linsensystem erforderlich sein kann, verfügt die Brille mit Halterung über die Möglichkeit das optische System individuell anzupassen.

Hierfür bieten sich zwei Möglichkeiten an:

1. Eine leichte Verschiebung eines oder beider Linsensysteme.
2. Veränderung des Winkels eines oder beider Linsensysteme.

**Anwendungsgebiete**

Die Hauptanwendung beschriebener Korrekturgläser liegt in der augennahen Betrachtung von Displays, wie sie sich an Smartphones und Ähnlichem befinden.

Ein solches Smartphone kann in einer Halterung etwa 9 cm vor der Spezialbrille angebracht sein und auf diesem können mit einem entspannten Auge Filme oder Ähnliches betrachtet werden. Dabei stellt sich schnell der Effekt einer Grossbildleinwand ein. Kommen dabei Farb- bzw. Polarisationsfilter zum Einsatz, können dreidimensionale Effekte erzielt werden.

Da nahezu alle Smartphones mit einer Kamera ausgestattet sind, können interaktive Anwendungen z. B. Objekterkennung/Gesichtserkennung der Umgebung integriert werden. Eine weitere Möglichkeit ist Explosionszeichnungen, Legenden oder Ähnliches über ein von der Kamera aufgenommenes Bild zu legen und damit z. B. Bedienungsanleitungen einzuspiegeln.

Da das Smartphone an einer Halterung der Spezialbrille angebracht ist, hat der Benutzer bei allen Tätigkeiten freie Hände.

Die Integration einer zweiten Kamera mit Augenabstand in Smartphones würde, wenn beide mit Polarisationsfiltern ausgestattet sind, dreidimensionale Filme ermöglichen.

Bei dem beschriebenen System handelt es sich um eine günstig herzustellende Lösung zur Betrachtung von augennahen Displays. Diese müssen dafür in einer Spezialhalterung in einem Abstand zwischen von etwa 6 bis 12 Zentimeter von der Spezialbrille angebracht sein.

Das System ist rein optischer Natur und verfügt über keine eigenen Displays wie z. B. das von der Carl Zeiss AG unter dem Namen "cinemizer plus" vertriebene System.

Auch dient es nicht dazu, wie die 60° blick-umlenkenden TV-Brillen mit integriertem Prisma, aus dem Liegen geradeaus schauen zu können.

**Patentansprüche**

**1.** Gesamtsystem, welches eine ermüdungsfreie Betrachtung eines Displays aus einem Abstand zwischen etwa 6 bis 12 cm vom Auge mit freien Händen ermöglicht, wobei das System aus zwei Komponenten besteht, welche einzeln oder in Kombination eingesetzt werden können, wobei die eine Komponente eine Brille ist, an welcher in etwa 6 bis 12 cm von der Linse eine Halterung zur Befestigung des Displays (z. B. eines Smartphones) angebracht ist, und die andere Komponente eine Linse, respektive Linsensystem, ist, welches die ermüdungsfreie Betrachtung eines Displays aus einem Abstand zwischen etwa 6 bis 12 cm vom Auge, mit einem und zwei Augen, ermöglicht.

**2.** Gesamtsystem nach Anspruch 1, **gekennzeichnet durch**
eine Korrektur des Nahpunktes in einem Bereich, der akkommodationsloses Sehen von sehr nahen Objekten ermöglicht.

**3.** Gesamtsystem nach Anspruch 2,
**dadurch gekennzeichnet, dass**
die Korrektur des Nahpunktes einen gerundeten Korrekturwert von 11 Dioptrien aufweist.

**4.** Gesamtsystem nach einem der vorhergehenden Ansprüche,
**gekennzeichnet durch**
eine Korrektur des Konvergenznahpunktes, um eine möglichst parallele Ausrichtung beider Augen auf ein sehr nahes Objekt zu ermöglichen.

**5.** Gesamtsystem nach Anspruch 4
**dadurch gekennzeichnet, dass**
die Korrektur des Konvergenznahpunktes, angewandt auf normalsichtige Menschen, eine Korrektur um 35 Prismendioptrien ergibt.

**6.** Gesamtsystem zumindest nach den Ansprüchen 2 und 4,
**dadurch gekennzeichnet, dass**
beide Korrekturen sich in einer Linse vereinigen.

**7.** Gesamtsystem nach Anspruch 6,
**dadurch gekennzeichnet, dass**
die Linse 11 Dioptrien stark ist.

**8.** Gesamtsystem nach Anspruch 6 oder 7,
**dadurch gekennzeichnet, dass**
in die Linse ein Prisma eingearbeitet ist.

**9.** Gesamtsystem zumindest nach Anspruch 6,
**dadurch gekennzeichnet, dass**
die Achse der Linse außermittig verschoben ist.

**10.** Gesamtsystem nach Anspruch 6,
**dadurch gekennzeichnet, dass**
die optische Achse um 3,18 cm verschoben ist.

**11.** Gesamtsystem nach einem der vorhergehenden Ansprüche, **dadurch gekennzeichnet, dass**
es rein optischer Natur ist und über keine eigenen Displays verfügt.

**12.** Gesamtsystem nach einem der vorhergehenden Ansprüche, **dadurch gekennzeichnet, dass**

die Brille mit Halterung über die Möglichkeit verfügt, das optische System indivduell anzupassen.

13. Gesamtsystem nach Anspruch 12,
 **dadurch gekennzeichnet, dass**
 eines oder beide Linsensysteme verschiebbar sind.

14. Gesamtsystem nach Anspruch 12 oder 13,
 **dadurch gekennzeichnet, dass**
 ein Winkel von einem oder beiden Linsensystemen veränderbar ist.

# Abbildungen

**Ansicht des Gesamtsystems**

**Seitenansicht (Abbildung 1)**

**Perspektive von oben (Abbildung 2)**

**Statische Verstärkung mittels Sportbügeln bzw. eines Bandes um den hinteren Kopfbereich**

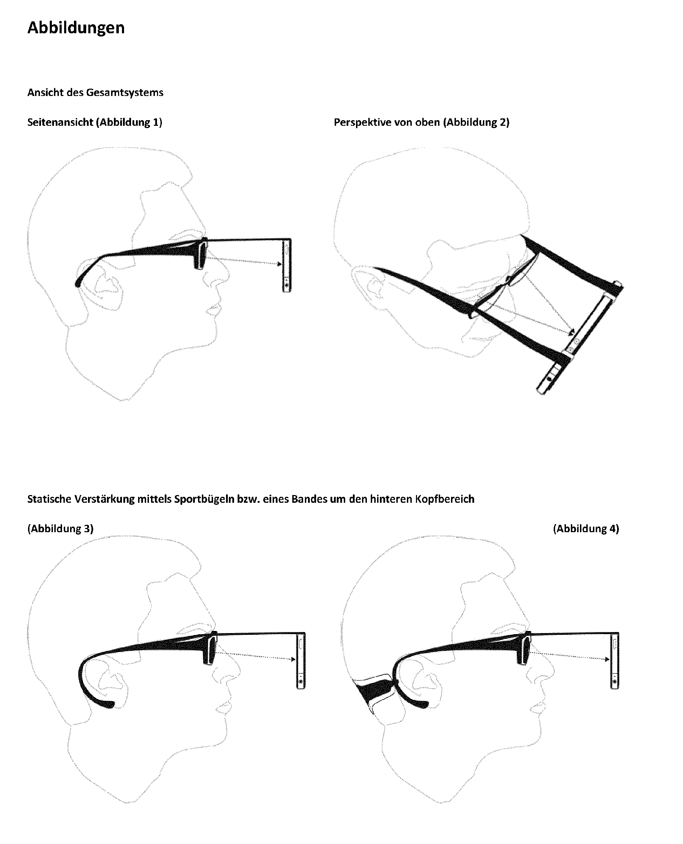

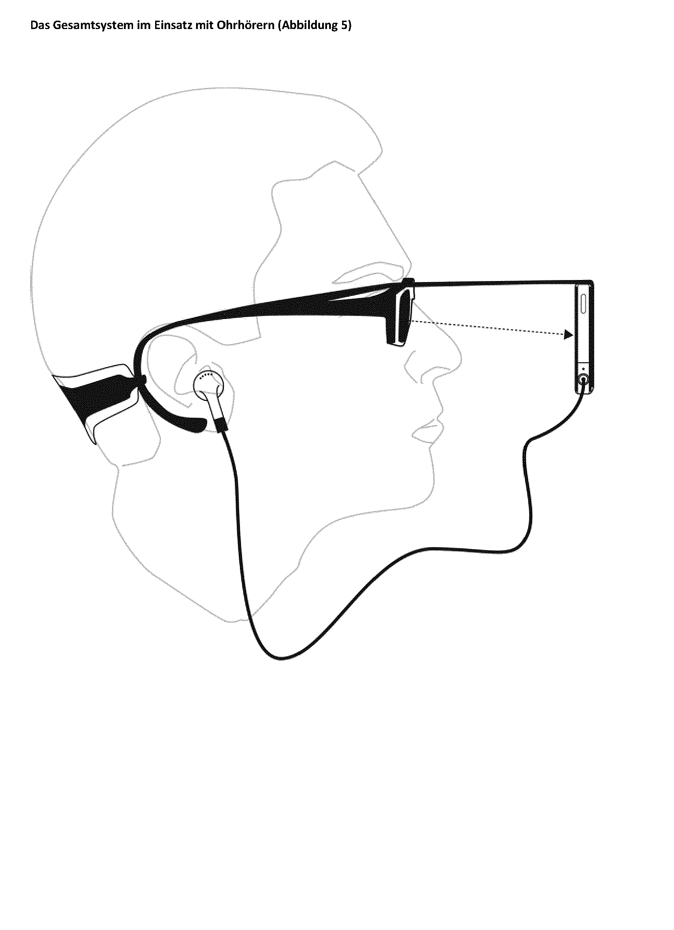

**(Abbildung 3)**

**(Abbildung 4)**

Das Gesamtsystem im Einsatz mit Ohrhörern (Abbildung 5)

**Für die Berechnung der Dioptrien relevantes System (Abbildung 6)**

relevantes System

Auge          Linse          Display

**Berechnung der Dioptrien eines Brillenglases für die Korrektur des Nahpunktes (Abbildung 7)**

Gegenstandsweite (g)

9 cm

Linse                    Display

$$D \text{ (Dioptrien)} = \frac{1}{g \text{ (m)}}$$

**Die Betrachtung eines augennahen Displays ist ohne Korrektur nur mit starkem Schielen möglich (Abbildung 8)**

Punkt

Schielen

**Durch Strahlenablenkung mittels eines Prisma lässt sich dies korrigieren (Abbildung 9)**

Punkt

**Die Verschiebung der optischen Achse einer Linse erzeugt als Nebenwirkung einen prismatischen Effekt (Abbildung 10)**

Optische Achse einer Linse

Verschiebung erzeugt prismatische Nebenwirkung

Europäisches
Patentamt

European
Patent Office

Office européen
des brevets

# EUROPÄISCHER RECHERCHENBERICHT

**Nummer der Anmeldung**

EP 12 16 3175

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Edvin Kee: "iPhone Virtual Reality Viewer", , 18. August 2011 (2011-08-18), XP002677788, Gefunden im Internet: URL:http://www.ubergizmo.com/2011/08/iphone-virtual-reality-viewer/ [gefunden am 2012-06-14] | 1,11 | INV. G02B27/01 |
| Y | * das ganze Dokument * | 2-10, 12-14 | |
| | ----- | | |
| Y | EP 0 362 692 A2 (KELLNER HELMUT) 11. April 1990 (1990-04-11) * das ganze Dokument * | 2-10, 12-14 | |
| | ----- | | |
| Y | US 5 204 702 A (SHAPIRO ALLAN W [US]) 20. April 1993 (1993-04-20) * das ganze Dokument * | 2-10, 12-14 | |
| | ----- | | |
| X | LOGAN OLSON J ET AL: "A design for a smartphone-based head mounted display", VIRTUAL REALITY CONFERENCE (VR), 2011 IEEE, IEEE, 19. März 2011 (2011-03-19), Seiten 233-234, XP031863558, DOI: 10.1109/VR.2011.5759484 ISBN: 978-1-4577-0039-2 | 1,11 | |
| Y | * das ganze Dokument * | 2-10, 12-14 | |
| | ----- | | |
| X | US 2010/079356 A1 (HOELLWARTH QUIN C [US]) 1. April 2010 (2010-04-01) * Zusammenfassung * * Abbildungen 1-6 * * Absatz [0134] - Absatz [0140] * | 1-14 | |
| | ----- | | |
| | -/-- | | |

**RECHERCHIERTE SACHGEBIETE (IPC)**

G02B
G02C

Der vorliegende Recherchenbericht wurde für alle Patentansprüche erstellt

| Recherchenort | Abschlußdatum der Recherche | Prüfer |
|---|---|---|
| München | 15. Juni 2012 | Windecker, Robert |

EPO FORM 1503 03.82 (P04C03)

Europäisches Patentamt
European Patent Office
Office européen des brevets

**EUROPÄISCHER RECHERCHENBERICHT**

Nummer der Anmeldung

EP 12 16 3175

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/012470 A1 (HIND SIGHT IND INC [US]; FUZIAK ROBERT J JR [US]) 22. Januar 2009 (2009-01-22) | 1,11 | |
| Y | * Abbildungen 1a,2a,3a * * Absatz [0019] - Absatz [0038] * ----- | 2-10, 12-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 15. Juni 2012 | Windecker, Robert |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 16 3175

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2012

| Im Recherchenbericht angeführtes Patentdokument | | Datum der Veröffentlichung | Mitglied(er) der Patentfamilie | | Datum der Veröffentlichung |
|---|---|---|---|---|---|
| EP 0362692 | A2 | 11-04-1990 | DE | 3834077 A1 | 05-07-1990 |
| | | | EP | 0362692 A2 | 11-04-1990 |
| | | | JP | 2168225 A | 28-06-1990 |
| US 5204702 | A | 20-04-1993 | KEINE | | |
| US 2010079356 | A1 | 01-04-2010 | KEINE | | |
| WO 2009012470 | A1 | 22-01-2009 | US | 2008198324 A1 | 21-08-2008 |
| | | | WO | 2009012470 A1 | 22-01-2009 |

EPO FORM P0461

Für nähere Einzelheiten zu diesem Anhang : siehe Amtsblatt des Europäischen Patentamts, Nr.12/82